# EUROPÄISCHE PATENTSCHRIFT

(11) **EP 1 616 748 B1**
(45) Veröffentlichungstag und Bekanntmachung des Hinweises auf die Patenterteilung: **16.05.2007**
(21) Anmeldenummer: 05013850.2
(22) Anmeldetag: 27.06.2005
(51) Int. Cl.: B60N 2/30, B60N 2/06, B60R 22/26, B60R 11/02

(54) **Kraftfahrzeug mit mindestens einer hinteren Sitzreihe**
Automotive vehicle with at least one rear seat row
Véhicule automobile avec au moins une rangée de sièges arrières

(30) Priorität: 03.07.2004 DE 102004032247
(43) Veröffentlichungstag der Anmeldung: 18.01.2006
(73) Patentinhaber: Bayerische Motoren Werke Aktiengesellschaft, 80809 München (DE)
(72) Erfinder: Schwingenschloegel, Stefan, 81543 München (DE); Burghard, Kai, 80807 Muenchen (DE); Goerg, Christian, 85247 Schwabhausen (DE); Virsik, Karol, 81541 Muenchen (DE); Reitmeir, Maximilian, 80809 Muenchen (DE); Poweleit, Axel-Artur, 80469 München (DE); Nedved, Rudolf Dirk, 81673 Muenchen (DE); Kaltschmidt, Thilo, Thousand Oaks, 91360 CA (US)

(56) Entgegenhaltungen:
- EP-A- 0 940 288
- DE-A1- 10 056 084
- DE-A1- 10 244 100
- DE-A1- 10 310 762
- DE-A1- 19 742 408
- FR-A- 2 820 099
- FR-A- 2 850 340

## Beschreibung

Die Erfindung betrifft ein Kraftfahrzeug mit mindestens einer hinteren Sitzreihe, die zwei äußere und einen mittleren Sitz aufweist.

Bei raumfunktionalen Fahrzeugen, wie Minivans, SUV's, MPV's oder Crossover Vehicles mit einer zweiten und dritten Sitzreihe stellt sich häufig das Problem, dass aufgrund des mittleren Sitzplatzes in der zweiten Sitzreihe nicht ausreichend Bauraum für eine adäquate Beinfreiheit in der dritten Sitzreihe geschaffen wird. Darüber hinaus ist es auch nicht möglich, einen Freiraum für eine Verschiebung der äußeren Sitze der zweiten Sitzreihe zur Fahrzeugmitte hin zu schaffen, ohne dass der mittlere Sitz aus dem Fahrzeug entfernt werden muss. Ein derartiges Fahrzeug ist beispielsweise aus der EP-A- 0940288 bekannt.

Aus der DE 10056084 A1 geht ein Fahrzeug mit drei Sitzreihen hervor, bei dem die mittlere Sitzreihe aus einer ersten Position mit einer Sitzfunktion in eine zweite Position umklappbar ist. In der zweiten Position wird ein Sitzteil der mittleren Sitzreihe in eine im Fahrzeugboden ausgebildete Vertiefung so verschwenkt, dass die Unterseite des Sitzteils nach dem Umklappen nach oben zeigt. Eine Rückenlehne der mittleren Sitzreihe kann in einer Ausführungsform in eine im Fahrzeugboden ausgebildete Vertiefung verschwenkt werden, so dass das Sitzteil und die Rückenlehne eine ebene Fläche bilden. In einer anderen Ausführungsform wird die Rückseite der Rückenlehne auf die Unterseite des Sitzteils geklappt, so dass das Sitzteil und die Rückenlehne übereinander liegend angeordnet sind.

Es ist daher Aufgabe der vorliegenden Erfindung, ein Kraftfahrzeug zu schaffen, bei dem bei Bedarf schnell und mit einfachen Mitteln ein ausreichender Freiraum im Bereich der hinteren Sitze geschaffen werden kann.

Diese Aufgabe wird erfindungsgemäß durch die im Anspruch 1 angegebenen Merkmale gelöst.

Ein mit dem erfindungsgemäß ausgebildeten Sitz ausgestattetes Kraftfahrzeug hat den Vorteil, dass durch ein Weg-Klappen des mittleren Sitzes der zweiten Sitzreihe ein sehr großer Bauraum zwischen den zwei äußeren Sitzen der zweiten Sitzreihe geschaffen wird, ohne dass dabei der mittlere Sitz aus dem Fahrzeug entfernt werden muss. Dieser Bauraum ermöglicht eine größere Beinfreiheit für die dritte Sitzreihe und schafft auch die Möglichkeit, die äußeren Sitze der zweiten Sitzreihe nach innen zu verschieben. Zudem kann die Unterseite des mittleren Sitzkissens für funktionale Elemente, wie z. B. Cupholder und/oder Ablagen verwendet werden.

Durch die in den Unteransprüchen aufgeführten Merkmale sind vorteilhafte Weiterbildungen des im Anspruch 1 angegebenen Kraftfahrzeugs möglich.

Besonders einfach gestaltet sich das Umklappen, wenn nach einer bevorzugten Weiterbildung der mittlere Sitz in Fahrtrichtung nach vorne umklappbar ist.

Damit der Vorgang des Umklappens ohne großen Aufwand und auch schnell vor sich gehen kann, sind nach einer vorteilhaften Ausgestaltung an dem mittleren Sitz zwei Gelenkpunkte vorgesehen.

Der erste Gelenkpunkte liegt vorteilhafterweise am vorderen Ende des Sitzkissens, während der zweite Gelenkpunkt zwischen dem Sitzkissen und der Rückenlehne angeordnet ist.

Damit beim Umklappvorgang des mittleren Sitzes ein korrekter Bewegungsablauf eingehalten wird, ist gemäß einer vorteilhaften Ausführungsform die Bewegung zwischen dem Sitzkissen und der Rückenlehne über eine Mechanik zwangsgesteuert. Dies hat zur Folge, dass der Umklappvorgang einfach, schnell und ohne große Mühe erfolgen kann.

Zur lagegenauen Positionierung des mittleren Sitzes kann dieser sowohl in seiner Ausgangslage wie auch in seiner umgeklappten Stellung in Fahrzeuglängsrichtung verschiebar sein. Somit kann der mittlere Sitz in jeder Stellung an die individuellen Bedürfnisse angepasst werden.

Der für den mittleren Sitz erforderliche Dreipunktgurt ist nach einer bevorzugten Ausgestaltung an einem der äußeren Sitze der mittleren Sitzreihe angeordnet. Außerdem ist die Rückenlehne des mittleren Sitzes mit einer verstellbaren Kopfstütze versehen.

Die Rückenlehne des mittleren Sitzes ist nach einer bevorzugten Ausführungsform an ihrer Rückseite im oberen Bereich mit einem Monitor, vorzugsweise einem 10-Zoll-Monitor versehen. Die Anbringung des Monitors in der Rückenlehne ermöglicht zum einen die Verwendung eines größeren Monitors, als bisher üblich, insbesondere kann ein 10-Zoll-Monitor verwendet werden, zum anderen kann je nach Stellung des mittleren Sitzes nur die dritte Sitzreihe oder die zweite und die dritte Sitzreihe Blickkontakt zu dem Monitor haben.

Weitere Vorteile und Merkmale der vorliegenden Erfindung werden aus der nachfolgenden detaillierten Beschreibung eines Ausführungsbeispiels eines erfindungsgemäß ausgestatteten Kraftfahrzeuges im Zusammenhang mit den beigefügten Zeichnungen ersichtlich. Es zeigen:
- Fig. 1: ein Blick von oben in ein erfindungsgemäß ausgestattetes Kraftfahrzeug mit drei Sitzreihen, bei dem sich der mittlere Sitz der zweiten Sitzreihe in seiner normalen Stellung befindet;
- Fig. 2: ein Blick von oben in das erfindungsgemäß ausgestattete Kraftfahrzeug mit drei Sitzreihen, während des Umklappvorgangs des mittleren Sitzes;
- Fig. 3: ein Blick von oben in das erfindungsgemäß ausgestattete Kraftfahrzeug mit drei Sitzreihen, bei dem sich der mittlere Sitz in seiner umgeklappten Stellung befindet; und
- Fig. 4: eine Prinzipskizze, welche die Kinematik beim Umklappvorgang des mittleren Sitzes verdeutlicht.

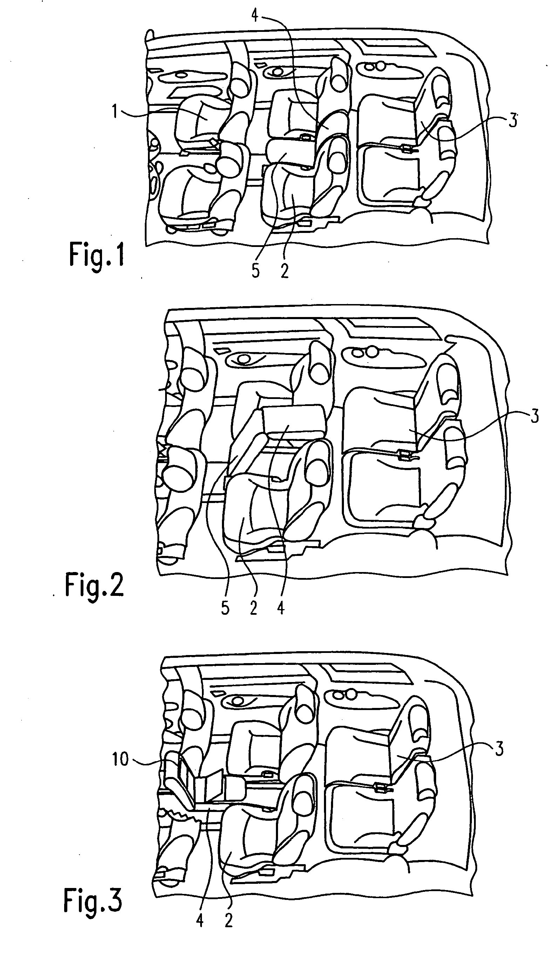

In den Figuren 1 bis 3 ist ein Kraftfahrzeug von oben zu sehen, bei dem das Dach weggeschnitten ist. Man erkennt drei Sitzreihen 1, 2 und 3, von denen die erste und die dritte Sitzreihe 1 und 3 jeweils zwei Sitzplätze aufweisen, während die zweite Sitzreihe 2 zusätzlich einen mittleren Sitz 4 aufweist, der als erfindungsgemäß als Klappsitz ausgebildet ist. Folglich kann die zweite Sitzreihe je nach Stellung des mittleren Sitzes 4 zwei oder drei Sitzplätze aufweisen.

In Figur 1 ist ein Zustand gezeigt, bei dem die mittlere Sitzreihe 2 drei Sitzplätze aufweist, während in Figur 3 ein Zustand gezeigt ist, bei dem die mittlere Sitzreihe 2 nur zwei Sitzplätze aufweist. In Figur 2 ist ein Zwischenzustand gezeigt, der eine Stellung des mittleren Sitzes 4 während des Umklappvorgangs zeigt.

Der mittlere Sitz 4 weist ein Sitzkissen 5 und eine Rückenlehne 6 auf.

Wie sich aus einem Vergleich der Figuren 1 bis 3 ergibt, erfolgt das Umklappen des mittleren Sitzes 4 so, dass die Unterseite des Sitzkissens 5 nach dem Umklappen nach oben zeigt. Dazu wird der mittlere Sitz 4 in Fahrtrichtung nach vorne umgeklappt.

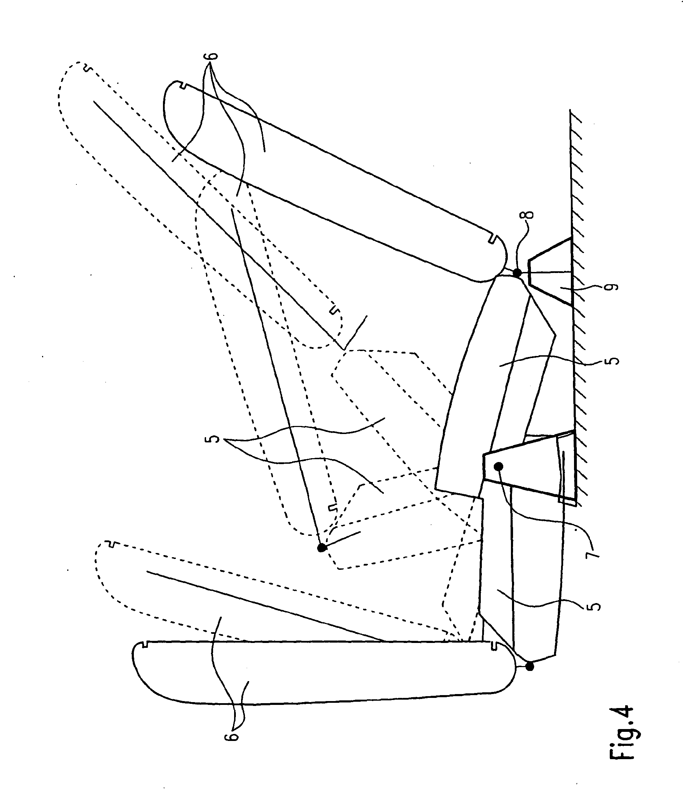

Der Klappvorgang ist in Figur 4 dargestellt. Das Sitzkissen 6 ist über einen ersten Gelenkpunkt 7 an seinem vorderen Ende an der Karosserie des Kraftfahrzeuges angelenkt. Ein zweiter Gelenkpunkt 8 liegt am hinteren Ende des Sitzkissens 6 und verbindet dieses mit der Rückenlehne 6. Das Sitzkissen 5 und die Rückenlehne 6 sind mit einer Mechanik (nicht dargestellt) versehen, welche die Bewegung zwischen dem Sitzkissen 5 und der Rückenlehne 8 beim Umklappen zwangssteuert.

Um den mittleren Sitz 4 von der in Figur 1 gezeigten Stellung in die in Figur 3 gezeigte Stellung zu überführen, wird die Rückenlehne 6 nach oben gezogen. Dabei hebt der zweite Gelenkpunkt 8 von seinem Auflager 9 ab, und es ergibt sich eine Stellung, bei der das Sitzkissen 5 und die Rückenlehne 6 in einer geraden Linie liegen. Nun wird die Rückenlehne 6 wieder nach unten gedrückt. Dabei wandert der zweite Gelenkpunkt 8 aufgrund der Zwangssteuerung in Fahrtrichtung gesehen nach vorne. Am Ende des Klappvorgangs kommt das Sitzkissen 5 in eine Stellung zu liegen, bei welcher die Unterseite des Sitzkissens 5 nach oben zeigt.

Im oberen Bereich der Rückenlehne 6 des mittleren Sitzes 4 ist ein Monitor 10, vorzugsweise ein 10-Zoll-Monitor eingebaut, der in der Stellung nach Figur 1 nur von der hinteren Sitzreihe 3 aus eingesehen werden kann, während er in der Stellung nach Figur 3 zusätzlich auch von der zweiten Sitzreihe 2 zu sehen ist.

In der in Figur 3 gezeigten Stellung kann die Unterseite des Sitzkissens 5 zur Aufnahme von funktionalen Umfängen, wie z. B. Cupholder, Ablagen, Bedienelementen, Buchsen für den Anschluss von Info-/ Kommunikationsgeräten, einer Ladestation für Akkus, Fußablage, Münzfach usw. dienen.

Der mittlere Sitz 4 kann sowohl in der Stellung nach Figur 1 als auch in der Stellung nach Figur 3 in Fahrzeuglängsrichtung verschiebbar sein. Ein Dreipunkt-Sicherheitsgurt für den mittleren Sitz 4 ist an einem der äußeren Sitze angeordnet. Weiterhin kann die Rückenlehne des mittleren Sitzes 4 mit einer verstellbaren Kopfstütze versehen sein.

Die vorhergehende Beschreibung des Ausführungsbeispieles gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Kraftfahrzeug mit einer vorderen Sitzreihe (1) und mit mindestens einer hinteren Sitzreihe (2, 3), die zwei äußere Sitze und einen mittleren Sitz (4) aufweist, wobei der mittlere Sitz (4) mit einem Sitzkissen (5) und einer Rückenlehne (6) versehen ist, **dadurch gekennzeichnet, dass** das Sitzkissen (5) an seinem vorderen Ende über ein vorderes, erstes Gelenk (7) an der Karosserie des Kraftfahrzeuges angelenkt ist, wobei das Sitzkissen (5) über ein zweites Gelenk (8) mit der Rückenlehne (6) verbunden ist, wobei das zweite Gelenk (8) am hinteren Ende des Sitzkissens (5) ausgebildet ist, wobei das Sitzkissen (5) und die Rückenlehne (6) mit einer Mechanik versehen sind, welche die Bewegung zwischen dem Sitzkissen (5) und der Rückenlehne (8) beim Umklappen des mittleren Sitzes (4) zwangssteuert, wobei der mittlere Sitz (4) reversibel aus einer ersten Position mit einer Sitzfunktion in Fahrtrichtung nach vorne in eine zweite Position hinter der vorderen Sitzreihe (1) umklappbar ist, wobei der mittlere Sitz (4) derart in die zweite Position umklappbar ist, dass die Unterseite des Sitzkissens (5) nach dem Umklappen nach oben zeigt, und wobei der Klappvorgang so erfolgt, dass die Rückseite der Rückenlehne (6) in der zweiten Position in Richtung auf die hintere Sitzreihe (2, 3) zeigt und sich in einer stehenden Position befindet und dass die Unterseite des Sitzkissens (5) zur Aufnahme von funktionalen Umfängen dienen kann, wobei die funktionalen Umfänge an der Unterseite des Sitzkissens (5) einen Cupholder, Bedienelemente, Buchsen für den Anschluss von Info-/Kommunikationsgeräten, eine Ladestation für Akkus oder ein Münzfach betreffen.

2. Kraftfahrzeug nach den Ansprüchen 1 oder 2, **dadurch gekennzeichnet, dass** der mittlere Sitz (4) in Fahrzeuglängsrichtung verschiebbar ist.

3. Kraftfahrzeug nach einem der vorhergehenden Ansprüche, **dadurch gekennzeichnet, dass** an einem der äußeren Sitze ein Dreipunktgurt für den mittleren Sitz (4) angeordnet ist.

4. Kraftfahrzeug nach einem der vorhergehenden Ansprüche, **dadurch gekennzeichnet, dass** die Rückenlehne (6) des mittleren Sitzes (4) mit einer verstellbaren Kopfstütze versehen ist.

5. Kraftfahrzeug nach einem der vorhergehenden Ansprüche, **dadurch gekennzeichnet, dass** die Rückenlehne (6) des mittleren Sitzes (4) an ihrer Rückseite im oberen Bereich mit einem Monitor (10) versehen ist.

6. Kraftfahrzeug nach einem der vorhergehenden Ansprüche, **dadurch gekennzeichnet, dass** der Monitor (10) ein 10-Zoll-Monitor ist.

## Claims

1. A motor vehicle with a front row (1) of seats and at least one rear row (2, 3) comprising two outer seats and a middle seat (4), wherein the middle seat (4) has a cushion (5) and a back rest (6), **characterised in that** the front end of the cushion (5) is pivoted by a front first joint (7) to the vehicle body, wherein the cushion (5) is connected by a second joint (8) to the back rest (6), wherein the second joint (8) is situated at the rear end of the cushion (5), wherein the cushion (5) and the back rest (6) are equipped with a mechanism which automatically controls the relative movement of the cushion (5) and back rest (8) when the middle seat (4) is turned round, wherein the middle seat (4) can be reversibly turned from a first position as a seat in the direction of travel, forward into a second position behind the front row (1), wherein the middle seat (4) can be turned round into the second position so that after turning the underside of the cushion (5) points upwards, and wherein after turning, the back of the back rest (6) in the second position points towards the back row (2, 3) and is in a vertical position and the underside of the cushion (5) can hold peripheral components, wherein the peripheral components on the underside of the cushion (5) comprise a cup holder, operating elements, sockets for connecting information or communication devices, a battery charging station or a coin box.

2. A vehicle according to claim 1 or claim 2, **characterised in that** the middle seat (4) is movable in the longitudinal direction of the vehicle.

3. A vehicle according to any of the preceding claims, **characterised in that** a three-point belt for the middle seat (4) is disposed on one of the outer seats.

4. A vehicle according to any of the preceding claims, **characterised in that** the back rest (6) of the middle seat (4) has an adjustable head rest.

5. A vehicle according to any of the preceding claims, **characterised in that** the back rest (6) of the middle seat (4) is provided at the top back with a video display screen (10).

6. A vehicle according to any of the preceding claims, **characterised in that** the video display screen (10) is a ten-inch screen.

## Revendications

1. Véhicule automobile comprenant une rangée avant de sièges (1) et au moins une rangée arrière de sièges (2, 3) avec deux sièges externes et un siège médian (4) qui possède un coussin d'assise (5) et un dossier (6),
**caractérisé en ce que**
- le coussin d'assise (5) à son extrémité avant, est relié à la carrosserie du véhicule par une première articulation avant (7) et il est relié au dossier (6) par une seconde articulation (8) disposée à l'extrémité arrière du coussin (5),
- le coussin d'assise (5) et le dossier (6) sont équipés d'un mécanisme qui commande impérativement leur déplacement lors du rabattement du siège médian (4), qui passe ainsi de manière réversible d'une première position à fonctionnalité de siège proprement dit, à une seconde position derrière la rangée avant de sièges (1), en se déplaçant vers l'avant par rapport au sens de déplacement du véhicule,
- le siège médian (4) est rabattu dans sa seconde position, de manière que la face inférieure du coussin d'assise (5) regarde vers le haut après rabattement,
- le rabattement s'effectue de manière que la face arrière du dossier (6), dans la seconde position du siège, regarde en direction de la rangée arrière de sièges (2, 3) en se trouvant dans une position dressée,
- la face inférieure du coussin d'assise (5) sert à recevoir des éléments fonctionnels comme un porte-gobelets, des éléments de service, des douilles de raccordement d'appareils d'information et de communication, une station de chargement de batteries ou un compartiment à monnaie.

2. Véhicule selon la revendication 1,
**caractérisé en ce que**
le siège médian (4) peut coulisser dans la direction longitudinale du véhicule.

3. Véhicule selon la revendication 1 ou 2,
**caractérisé en ce qu'**
une ceinture à trois points, pour le siège médian (4) est disposée sur un des sièges externes.

4. Véhicule selon une des revendications précédentes,
**caractérisé en ce que**
le dossier (6) du siège médian (4) est équipé d'un appuie-tête réglable.

5. Véhicule selon une des revendications précédentes,
**caractérisé en ce que**
le dossier (6) du siège médian (4) porte un moniteur (10) vers le haut de sa face arrière.

6. Véhicule selon une des revendications précédentes,
**caractérisé en ce que**
le moniteur l'écran (10) est un écran de 10 pouces.
